(19) Europäisches Patentamt
European Patent Office
Office européen des brevets

(11) Publication number: **0 302 363 A2**

(12) **EUROPEAN PATENT APPLICATION**

(21) Application number: 88112031.5

(22) Date of filing: 26.07.88

(51) Int. Cl.[4]: C09D 3/49 , C09D 5/00 , C08L 71/00

(30) Priority: 27.07.87 US 78277

(43) Date of publication of application: 08.02.89 Bulletin 89/06

(84) Designated Contracting States: AT BE CH DE ES FR GB IT LI NL SE

(71) Applicant: UNION CARBIDE CORPORATION
39 Old Ridgebury Road
Danbury Connecticut 06817(US)

(72) Inventor: Yacka, Douglas Albig
7 West Union Avenue
Bound Brook New Jersey 08805(US)
Inventor: Colon, Ismael
57 Curtis Avenue
Piscataway New Jersey 08854(US)

(74) Representative: Wuesthoff, Franz, Dr.-Ing. et al
Patentanwälte Wuesthoff -v. Pechmann-Behrens-Goetz Schweigerstrasse 2
D-8000 München 90(DE)

(54) **Carboxylic acid-grafted blends of phenoxy and a modifier resin and waterborne coatings thereof.**

(57) A waterborne coating composition providing a coating capable of substantial deformation without loss of continuity and the like comprises a phenoxy resin mixed with a relatively soft modifier resin, such as a polyester polyol, part of the hydroxyl groups of the phenoxy and modifier resins having been esterified by reaction with an anhydride of a di- or polycarboxylic acid and neutralization to provide the desired water dispersibility and other characteristics for the coating composition and the resulting coating.

EP 0 302 363 A2

# CARBOXYLIC ACID-GRAFTED BLENDS OF PHENOXY AND A MODIFIER RESIN AND WATERBORNE COATINGS THEREOF

## BACKGROUND OF THE INVENTION

### Field of the Invention

This invention relates to phenoxy resin blends and, more particularly, to highly desirable formable coatings utilizing such phenoxy resin blends.

### Description of the Prior Art

Phenoxy resins, sometimes referred to as "thermoplastic polyhydroxyethers", are known in the art as components of corrosion-resistant coatings, e.g., zinc-rich coatings for metallic substrates, as described in US - A - 4,370,382, 4,391,855 and 4,476,260. Phenoxy-based coatings have not, however, proven to be entirely satisfactory.

More specifically, prior phenoxy-based coatings have not provided satisfactory adhesion to smooth substrates, e.g., metallic substrates, and have been subject to degradation by corrosion, particularly in high humidity environments. To obviate such problems, co-pending application Serial No. 725,535 discloses a phenoxy resin having pendant secondary hydroxyl groups of which 3 to 50 percent of such hydroxyl groups have been reacted to produce moieties having pendant carboxyl groups. Such carboxylic acid-containing phenoxy resins can be used as general purpose and corrosion resistant coatings, useful in water-dispersible coatings, adhesives and laminating systems.

However, it would be desirable to provide a resin system that would offer even further improved performance. As an example, the carboxylic acid-based phenoxy resins generally produce milky-white dispersions in water relatively limited shelf stability. Additionally, it would be desirable to be capable of offering more flexible coatings having lower viscosities, providing the potentiality for much higher solids contents.

Phenoxy resin blends with relatively softer resins have been found useful in making various injection molded products. Blends of phenoxy resins with relatively softer resins are thus described in US - A - 3,925,504 and 4,337,330.

While such coatings provide excellent corrosion resistance on non-deformed surfaces, these coatings are often not fully satisfactory for uses in which the substrate and coating undergo substantial deformation, or where bake temperatures of less than 205° C (400° F)are used (such uses often being termed "low bake" systems). As illustrative examples of such uses, there can be mentioned the stamping and forming of sheet metal, as in the automobile manufacturing industry. As a result of such deformation, corrosion resistance can be seriously degraded.

Co-pending application Serial No. 850,783 discloses a formable coating composition comprising a phenoxy resin and 1 to 50 percent by weight of the total resin of a modifier resin which is relatively soft in comparison to the phenoxy resin, is compatible with the phenoxy resin, and has specific reduced viscosity, glass transition temperature, solubility and molecular weight characteristics. By the term "formable compositions", it is meant that the coating is able to withstand physical operations to the substrate (e.g., rolling, bending, stamping, cutting, etc.) without significant damage to the continuity and adhesion of the coating. Accordingly, the protective properties of the coating are preserved.

In view of the general trend toward waterborne systems within the coatings industry, it would be desirable to provide a waterborne phenoxy resin system. It would be likewise desirable to provide such a waterborne phenoxy resin system which provides an adequately satisfactory flexible coating, even when crosslinked. Further, it would be desirable to provide such a waterborne phenoxy resin system which is characterized by a relatively low viscosity in comparison to phenoxy resin coatings so as to provide the potential for a much higher resin or solids content. It would additionally be desirable to provide systems of this sort which require lower bake temperatures to form coatings which are characterized by improved corrosion resistance. Importantly, it would be particularly desirable to provide a phenoxy resin system which

remains stable upon storage and does not gel upon such storage for long periods of time and which likewise remain stable even when pigmented.

All of these commercially important objectives can be met by utilizing the phenoxy resin system of the present invention.

## SUMMARY OF THE INVENTION

In accordance with the present invention, there is provided a waterborne coating composition comprising a blend of a phenoxy resin and from 5 to 50 percent, by weight of the total resin, of a modifier resin, compatible with the phenoxy resin, and being relatively soft in comparison thereto, and having:

(1) a reduced viscosity of 0.1 to 2, preferably 0.2 to 1, dl/g in tetrahydrofuran at 25° C;

(2) a glass transition temperature (Tg) of -120 to 30, preferably -100 to 0° C; and

(3) a number average molecular weight of 500 to 10,000, most typically from 500 to 3000.

Both the phenoxy and the modifier resin must contain hydroxyl groups, and 3 to 50 percent of the total hydroxyl groups present are reacted to produce moieties having carboxyl groups.

By suitable control of the appropriate parameters, as will be discussed hereinafter, it has been found that waterborne coating compositions can be provided which are either dispersions or clear solutions, as desired, and that such coating composition not only remains stable upon extended storage and upon being pigmented but imparts to the resulting coatings the desired characteristics of flexibility, ability to use lower bake temperatures and providing the improved and desired corrosion resistance characteristics. The low viscosity characteristics of such materials offer the potential for providing relatively high solids concentrations.

## DETAILED DESCRIPTION OF THE INVENTION

### The Phenoxy Resin

Any of a wide variety of phenoxy resins may be used. In general, the phenoxy resin will have a weight average molecular weight of 15,000 to 80,000 although the particular molecular weight can vary as is desired for the particular application.

Useful "thermoplastic poly(hydroxyether)" or "phenoxy" resins as used herein comprise the substantially linear polymers having the general formula:

$[-D-O-E-0-]_n$

wherein D is the radical residuum of a dihydric phenol, E is a hydroxyl-containing radical residuum of an epoxide and n represents the degree of polymerization and is at least 30 and is preferably 80 or more. The term "thermoplastic poly(hydroxyether)" is intended to include mixtures of at least two thermoplastic poly(hydroxyethers).

The thermoplastic poly(hydroxyethers) can be prepared by admixing from 0.985 to 1.015 moles of an epihalohydrin with 1 mole of a dihydric phenol together with from 0.6 to 1.5 moles of an alkali metal hydroxide, such as, sodium hydroxide or potassium hydroxide, generally in an aqueous medium, at a temperature of 10° to about 50° C until at least about 60 mole percent of the epihalohydrin has been consumed. The thermoplastic poly(hydroxyethers) thus produced have reduced viscosities of at least about 0.4. Reduced viscosity values are computed by use of the equation:

$$\text{Reduced Viscosity} = \frac{t_s - t_o}{ct_o}$$

wherein $t_o$ is the efflux time of the solvent (tetrahydrofuran), $t_s$ is the efflux time of the poly(hydroxyether) solution, c is the concentration of the poly(hydroxyether) solution in grams of poly(hydroxyether) per 100 ml. of tetrahydrofuran.

The dihydric phenol contributing the phenol radical residuum, D, can be either a dihydric mononuclear or a dihydric polynuclear phenol such as those having the general formula:

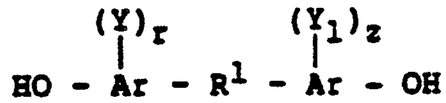

wherein Ar is an aromatic divalent hydrocarbon such as naphthylene and, preferably, phenylene, Y and $Y_1$ which can be the same or different are alkyl radicals, preferably having from 1 to 4 carbon atoms, halogen atoms, i.e., fluorine, chlorine,bromine and iodine, or alkoxy radicals, preferably having from 1 to 4 carbons atoms, r and z are integers having a value from 0 to a maximum value corresponding to the number of hydrogen atoms on the aromatic radical (Ar) which can be replaced by substituents and $R^1$ is a bond between adjacent carbon atoms as in dihydroxydiphenyl or is a divalent radical including, for example,

$-\underset{O}{\underset{\|}{C}}-$, -0-, -S-, -SO-, $-SO_2-$ and -S-S-,

and divalent hydrocarbon radicals such as alkylene, alkylidene, cycloaliphatic, e.g., cycloalkylidene, halogenated alkoxy or aryloxy substituted alkylene, alkylidene and cycloaliphatic radicals as well as alkarylene and aromatic radicals including halogenated, alkyl, alkoxy or aryloxy substituted aromatic radicals and a ring fused to an Ar group; or $R^1$ can be polyalkoxy, or polysiloxy, or 2 or more alkylidene radicals separated by a aromatic ring, a tertiary amino group, an ether linkage, a carbonyl group or a sulfur-containing group such as sulfoxide.

Examples of specific dihydric polynuclear phenols include, bis (hydroxyphenyl) alkanes such as 2,2-bis-(4-hydroxyphenol)propane, 2.4′-dihydroxydiphenylmethane, bis (2-hydroxyphenyl)methane, bis(4-hydroxyphenyl)methane, bis(4-hydroxy-2,6-dimethyl-3-methoxyphenyl)methane, 1,1-bis(4-hydroxyphenyl)ethane, 1,2-bis(4-hydroxyphenyl)ethane, 1,1-bis(4-hydroxy-2-chlorophenyl)ethane, 1,1-bis-(3-methyl-4-hydroxyphenyl)ethane, 1,3-bis(3-methyl-4-hydroxyphenyl)propane, 2,2-bis(3-phenyl-4-hydroxyphenyl)propane, 2,2-bis(3-isopropyl-4-hydroxyphenyl)propane, 2,2-bis(2-isopropyl-4-hydroxyphenyl)propane, 2,2-bis(4-hydroxylnaphthyl)propane, 2,2-bis(4-hydroxylphenyl)pentane, 3,3-bis(4-hydroxyphenyl)pentane, 2,2-bis(4-hydroxyphenyl)heptane, bis(4-hydroxyphenyl)phenylmethane, bis(4-hydroxyphenyl)cyclohexylmethane, 1,2-bis(4-hydroxyphenyl-1,2-bis(phenyl)propane, and 2,2,-bis(4-hydroxyphenyl)-1-phenylpropane.

Di(hydroxyphenyl)sulfones such as bis(4-hydroxy-phenyl)sulfone, 2,4′-dihydroxydiphenyl sulfone, 5′-chloro-2,4′-dihydroxydiphenyl sulfone, and 5′-chloro-4,4′-dihydroxydiphenyl sulfone.

Di(hydroxyphenyl)ethers such as bis(4-hydroxy-phenyl)ether, the 4,3′-, 4,2′-, 2,2′-, 2,3′-, dihydroxydiphenyl ethers, 4,4′-dihydroxy-2,6-dimethyldiphenyl ether, bis(4-hydroxy-3-isobutylphenyl)ether, bis(4-hydroxy-3-isopropylphenyl)ether, bis(4-hydroxy-3-chlorophenyl)ether, bis(4-hydroxy-3-fluorophenyl)ether, bis(4-hydroxy-3-bromophenyl)ether, bis(4-hydroxynaphthyl)ether, bis(4-hydroxy-3-chloronaphthyl)ether, bis-(2-hydroxydiphenyl)ether, 4,4′-dihydroxy-2,6-dimethoxydiphenyl ether, and 4,4-dihydroxy-2,5-diethoxydiphenyl ether.

Also suitable are the bisphenol reaction products of 4-vinylcyclohexene and phenols, e.g., 1,3-bis(p-hydroxyphenyl)-1-ethylcyclohexane and the bis-phenol reaction products of dipentene or its isomers and phenols such as 1,2-bis(p-hydroxyphenyl)-1-methyl-4-isopropylcyclohexane as well as bisphenols such as 1,3,3′ trimethyl-1-(4-hydroxyphenyl)-6-hydroxyindane, and 2,4-bis(4-hydroxyphenyl)-4-methylpentane.

Particularly desirable dihydric polynuclear phenols have the formula

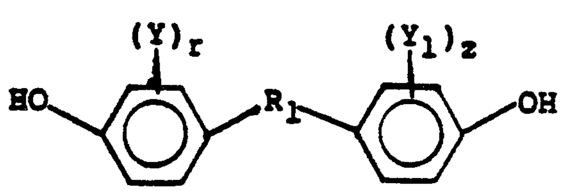

wherein Y and $Y_1$ are as previously defined, r and z have values from 0 to 4, inclusive, and $R_1$ is a divalent,

saturated aliphatic hydrocarbon radical, particularly alkylene and alkylidene radicals, having from 1 to 3 carbon atoms, and cycloalkylene radicals having up to and including 10 carbon atoms.

Mixtures of dihydric phenols can also be employed and whenever the term "dihydric phenol" or "dihydric polynuclear phenol" is used herein, mixtures of these compounds are intended to be included.

The epoxide contributing the hydroxyl containing radical residuum, E, can be monoepoxide or diepoxide. By "epoxide" is meant a compound containing an oxirane group, i.e., oxygen bonded to two vicinal aliphatic carbon atoms, thus,

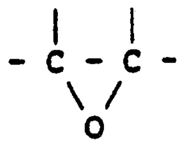

A monoepoxide contains one such oxirane group and provides a radical residuum E containing a single hydroxyl group, a diepoxide contains two such oxirane groups and provides a radical residuum E containing two hydroxyl groups. Saturated epoxides, by which term is meant diepoxides free of ethylenic unsaturation, i.e., > C = C < and acetylenic unsaturation, i.e., -C≡C- are preferred. Particularly preferred are halogen substituted saturated monoepoxides, i.e., the epihalohydrins and saturated diepoxides which contain solely carbon, hydrogen and oxygen, especially those wherein the vicinal or adjacent carbon atoms form a part of an aliphatic hydrocarbon chain. Oxygen in such diepoxides can be, in addition to oxirane oxygen, ether oxygen -O-, oxacarbonyl oxygen

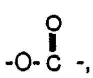, and carbonyl oxygen 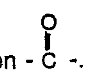.

Specific examples of monoepoxides include epichlorohydrins such as epichlorohydrin, epibromohydrin, 1,2-epoxy-1-methyl-3-chloropropane, 1,2-epoxy-1-butyl-3-chloropropane, and 1,2-epoxy-2-methyl-3-fluoropropane.

Illustrative diepoxides include diethylene glycol bis(3,4-epoxycyclohexane-carboxylate), bis(3,4-epoxycyclohexyl-methyl)adipate, bis(3,4-epoxycyclohexyl-methyl)phthalate, 6-methyl-3,4-epoxycyclohexylmethyl-6-methyl-3,4-epoxy -cyclohexane carboxylate, 2-chloro-3,4-epoxycyclohexylmethyl-2-chloro-3,4-epoxy-cyclohexane-carboxylate, diglycidyl ether, bis(2,3-epoxycyclopentyl)-ether, 1,5-pentanediol bis(4-methyl-3,4-epoxycyclohexyl-methyl)ether, bis(2,3-epoxy-2-ethylhexyl)adipate, diglycidyl maleate, diglycidyl phthalate, 3-oxa-tetracyclo[4.4.0.$1^{7,10}$.$0^{2,4}$]-undec-8-yl 2,3-epoxy-propyl ether, bis(2,3-epoxycyclopentyl)sulfone, bis(3,4-epoxyhexoxypropyl)sulfone, 2,2′-sulfonyldiethyl, bis(2,3-epoxycyclopentanecarboxylate),3-oxatetracyclo -[4.4.0.$1^{7,10}$.$0^{2,4}$]-undec-8-yl 2,3-epoxybutyrate, 4-pentenal-di-(6-methyl-3,4-epoxycyclohexylmethyl) acetal, ethylene glycol bis(9,10-epoxystearate), diglycidly carbonate, bis(2,3-epoxybutylphenyl)-2-ethylhexyl phosphate, diepoxydioxane, butadiene dioxide, and 2,3-dimethyl butadiene dioxide. The preferred diepoxides are those wherein each of the oxirane groups is connected to an electron donating substituent which is not immediately connected to the carbon atoms of that oxirane group. Such diepoxides have the grouping

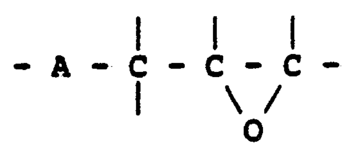

wherein A is an electron donating substituent such as

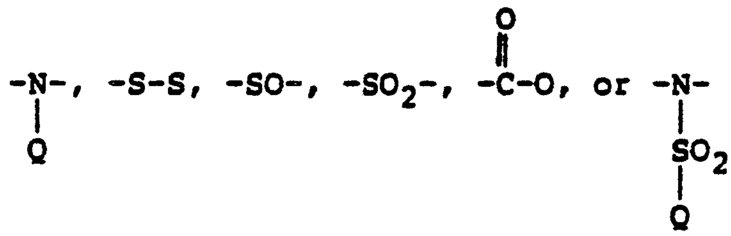

and Q is a saturated hydrocarbon radical such as an alkyl, cycloalkyl, aryl or aralkyl radical.

The preferred polyhydroxyether is available commercially as UCAR Phenoxy PKHH, a trade designation of Union Carbide Corporation for a condensation polymer derived from bisphenol-A (2,2-bis(p-hydroxyphenyl)propane and epichlorohydrin having the structural formula:

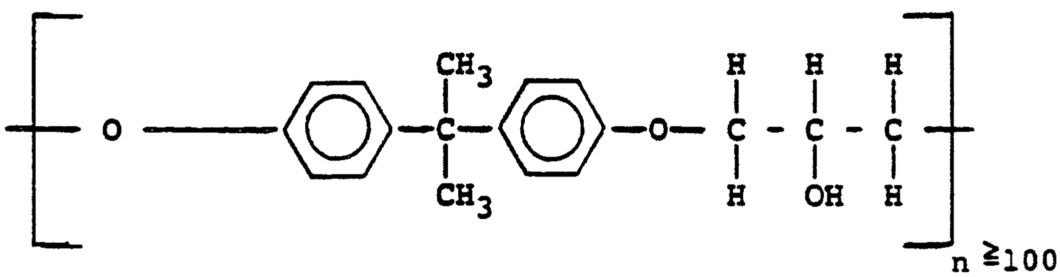

The phenoxy resin is available as a solution in glycol ether esters such as Cellosolve acetate (the acetate of a monoalkyl glycol ether sold under the Trademark Cellosolve by Union Carbide Corporation) or in pellet form which is readily soluble in a variety of solvents and solvent blends. The solid phenoxy resin sold under the designation PKHH by Union Carbide Corporation is soluble in the following solvents: butyl Carbitol, butyl Carbitol acetate, butyl Cellosolve, Carbitol solvent, Cellosolve acetate, Cellosolve solvent, diacetone alcohol, diethyl Carbitol, dimethylformamide, dimethyl sulfoxide, dioxane, ethoxy triglycol, mesityl oxide, methyl Cellosolve acetate, methyl ethyl ketone, and tetrahydrofuran.

Carbitol is a Trademark of Union Carbide Corporation for the monoalkyl ether of diethylene glycol.

The preparation of the above-described polyhydroxyethers is described in U.S.-A-3,305,528. Polyhydroxyethers of this type are likewise useful when the molecular weight is such that n is equal to or greater than 50 in the previously set forth formula. In addition to these polyhydroxyethers, one may also employ the linear thermoplastic polyethers described in U.S. - A - 3,177 089, 3, 306,872 and 2,602,075.

The relative amount of the phenoxy resin utilized in the resin blend will, in general, depend upon the handling and storage characteristics desired for the particular coating composition as well as the particular performance characteristics required for the specific intended application. Certainly, the phenoxy resin will be present in the resin blend in an amount of at least about 50 percent based upon the total weight of the resin blend so as to retain the desirable characteristics of the phenoxy resins.

Indeed, it will generally be desirable for most applications to have the phenoxy resin present in an amount of at least 70 weight percent, with from about 70 to 80 percent being generally preferred. As an upper limit, amounts of a phenoxy resin up to about 90% or even up to about 95%, may be satisfactory for some applications.

## The Modifier Resin

The modifier resins useful in this invention are relatively soft in comparison with the phenoxy resin. By the term "relatively soft" is meant that the modifier resin has a tensile modulus of less than 48,300 N/cm$^2$ (70,000 psi) at room temperature.

In addition, the useful modifier resins must be compatible with the phenoxy resin. By the term "compatible" is meant that a homogenous mixture is obtained at room temperature having a single phase and a single Tg. Moreover, useful modifier resins must meet the specific criteria previously identified as to reduced viscosity, molecular weight, and glass transition temperature.

Suitable general classes of polymers that are compatible with phenoxy are: polyesters, polyester

urethanes, polyether urethanes, and polyalkylene ethers (such as Polyox, polyethylene glycols, and UCON fluids). The preferred materials are aliphatic polyesters, such as those derived from epsilon-caprolactone. These include a variety of lactone-based polyols and polymers, for example TONE polyols and polymers available from Union Carbide Corp., as desribed in U.S. - A - 3,169,945. Such polycaprolactone diols are thus preferred. The number average molecular weight may typically vary from 500 to 3000, although materials having molecular weights up to 6000 or even up to 10,000 may be useful in some applications. These materials are produced by the catalytic polymerization of an excess of a lactone, e.g., caprolactone, and an organic polyfunctional initiator having at least 2 reactive hydrogen atoms. Illustrative of the latter are diols, such as ethylene glycol, triethylene glycol,and 1,2-propylene glycol.

When the organic functional initiator is reacted with the lactone, a reaction occurs that can be represented in its simplest form by the equation

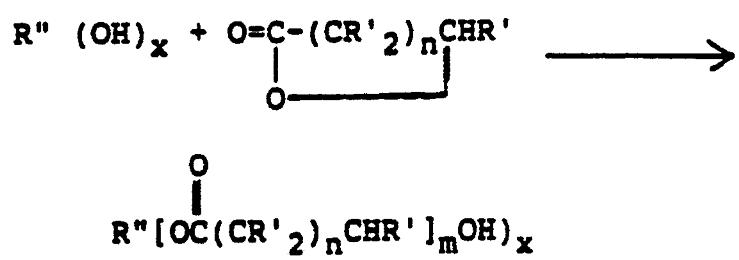

wherein n = 3-6, preferably 4. The value of x will most typically be 1-3, although the value can be somewhat higher. The reference to m is, of course, to the number of repeating units and will vary with the particular molecular weight (e.g., most typically 500 to 3000).

In this equation, the organic functional initiator is the $R''(OH)_x$ and the caprolactone is

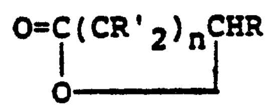

This can be caprolactone itself or a substituted caprolactone wherein $R'$ is an alkyl, alkoxy, aryl, cycloalkyl, alkaryl or aralkyl group, and $R''$ is an alkyl or alkoxy group, all as shown in U.S. - A -3,169,945.

In formulating coatings within the scope of this invention, various important considerations should be kept in mind. Since phenoxy resins themselves confer properties on the coating which are desirable for corrosion resistance (e.g., barrier properties) and for physical handling (e.g., anti-blocking), the concentration of the phenoxy resin should be maintained as high as possible, consistent with the need to be able to deform the coating during manufacture and to meet the bake cycle required, as well as the ability to obtain the desired waterborne characteristics. Similarly, it is desirable to maintain the Tg of the phenoxy/modifier resin blend as high as possible, consistent with the need to be able to deform, in order to prevent blocking of the coated metal when stored with adjacent surfaces in contact with each other, e.g., in roll or stacked sheet form.

As previously noted, a prime requirement for the modifier resin is that it contain functional groups capable of being satisfactorily esterified after having been blended with the phenoxy resin of choice, upon reaction with the anhydride of a di- or polycarboxylic acid. Accordingly, as will be discussed in more detail hereinafter, this requirement is most easily satisfied by utilizing a modifier resin having hydroxyl groups. Indeed, to provide the desired relative reactivity, it will generally be preferred to utilize a modifier resin having primary hydroxyl groups, as is the case with the preferred polycaprolactone diols.

Further, the molecular weight of the modifier resin selected should take into consideration the desired stability of the coating composition itself and the formable characteristics of the resulting coating. Thus, in general, the flexibility of the resulting coating will be enhanced by utilizing modifier resins having the higher molecular weights. On the other hand, stability of the coating composition will typically be enhanced by employing modifier resins with the lower molecular weights.

In general, the relative amount of the modifier resin utilized in the phenoxy resin blend will be determined by the desired waterborne characteristics of the coating composition as well as the stability thereof and the desired characteristics of the resulting coating. More particularly, enough of the modifier resin of choice should be employed so that the resulting coating composition has the desired stability and

waterborne characteristics. Increasing amounts of the modifier resin will enhance stability and the ability to make the resulting resin blend (following processing as will be hereinafter discussed) more readily water dispersible. It is likewise necessary to use enough of the selected modifier resin so that the resulting coating has the desired flexibility. On the other hand, unduly large amounts of the modifier resin could result in less than desirable utility under room temperature conditions (e.g., resulting in sticking or blocking).

Accordingly, the relative amount of the modifier resin used for a particular application will be dictated by these various considerations. As a minimum, the modifier resin, based upon the total weight of the resin, should be present in an amount of at least 5%. Useful amounts of the modifier resin for some application may be up to perhaps 50% by weight. However, as follows from the description of useful phenoxy resins and the relative amounts preferred, the general preference is for an amount of the modifier resin from 20 to 30 weight percent, which amount is presently believed should provide about the desired optimal properties for most applications.

## Modification of the Resin Blend

To provide the coating composition of this invention, the phenoxy resin-modifier resin blend is modified by reaction with any of a wide variety of useful anhydrides of a di- or polycarboxylic acid via conventional esterification techniques to incorporate the carboxylic acid moiety from the particular anhydride employed into the phenoxy and modifier resins. The reaction of anhydrides with hydroxyl-containing materials are well known and may be utilized herein.

Typical of the useful anhydrides are: succinic anhydride, citraconic anhydride, itaconic anhydride, alkenyl succinic anhydride, dodecenyl succinic anhydride, maleic anhydride, dichloromaleic anhydride, chlorendic anhydride, linoleic acid adduct of maleic anhydride, hexahydrophthalic anhydride, methyl tetrahydrophthalic anhydride, tetrahydrophthalic anhydride, maleic anhydride adduct of methylcyclopentadiene, trimellitic anhydride, phthalic anhydride,and nadic anhydride. Itaconic anhydride, maleic anhydride, tetrahydrophathalic anhydride, linoleic acid adduct of maleic anhydride, and the maleic anhydride adduct of methylcyclopentadiene, all having reactive double bonds capable of undergoing polymerization or copolymerization with other reactive, double bond-containing materials when subject to heat, catalysis or radiation, should produce coatings with improved solvent and temperature resistance. Of these, succinic anhydride and trimellitic anhydride are especially preferred. Trimellitic anhydride has the following structure:

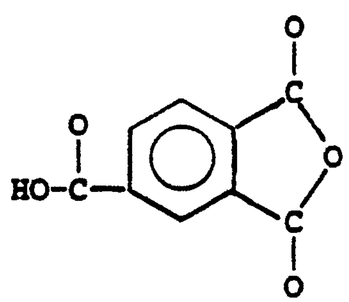

Therefore, compared to succinic anhydride or other monoanhydrides, each ester graft with the phenoxy resins generates two pendant carboxylic acid groups rather than one. This allows one to make a more polar molecule, and the aromatic ester linkage is less subject to hydrolysis than that of aliphatic esters.

Suitable catalysts are Lewis bases or electron donors. An important class is tertiary amines. Examples of tertiary amines which may be used to catalyze the reaction of anhydrides with the secondary hydroxyl of a polyhydroxy ether to form a half-ester acid are as follows: linear diamines, of the formula $(CH_3)_2N(CH_2)_nN(CH_3)_2$ where n = 1 to 4, N, N, N′,-N′-tetramethyl-1,3-butanediamine, alkyl tertiary monoamines, of the formula $N[(CH_2)_nCH_3]_3$ where n = 1 to 4, e.g., triethylamine, N,-N′-dimethylpiperazine, N-methylmorpholine, triethylenediamine, hexamethylenetetramine, pyridine, pyrazine, quinoline, benzyldimethylamine, alpha-methylbenzyldimethylamine, N-alkyl imidazoles wherein the alkyl group contains 1 to 4 carbon atoms, N-alkyl imidazolines wherein the alkyl group contains 1 to 4 carbon atoms. Similarly, suitable catalysts include tertiary phosphines, such as triphenyl phosphine, tricyclohexyl phosphine, and the like. Of these, triethylene diamine (also known as "Dabco," a trade designation of Air Products Company) is especially preferred. Because of its structure, it is less hindered and more nucleophilic than most other generally available amines, and therefore is more effective.

Tertiary amines have an unshared pair of electrons in their outer orbital. They are attracted to areas of reduced electron density in the molecules with which they react. It is postulated (without intending to be bound to any particular theory) that an activated complex is formed, as shown with the following reaction of Dabco with succinic anhydride:

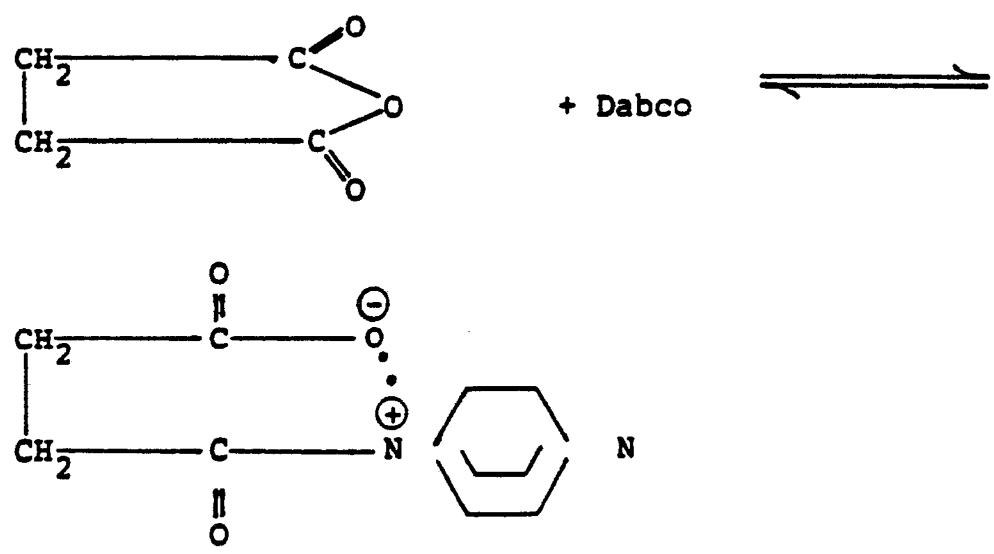


which is a quasi 6 membered zwitterion wherein complexation lowers the activation energy of the reaction

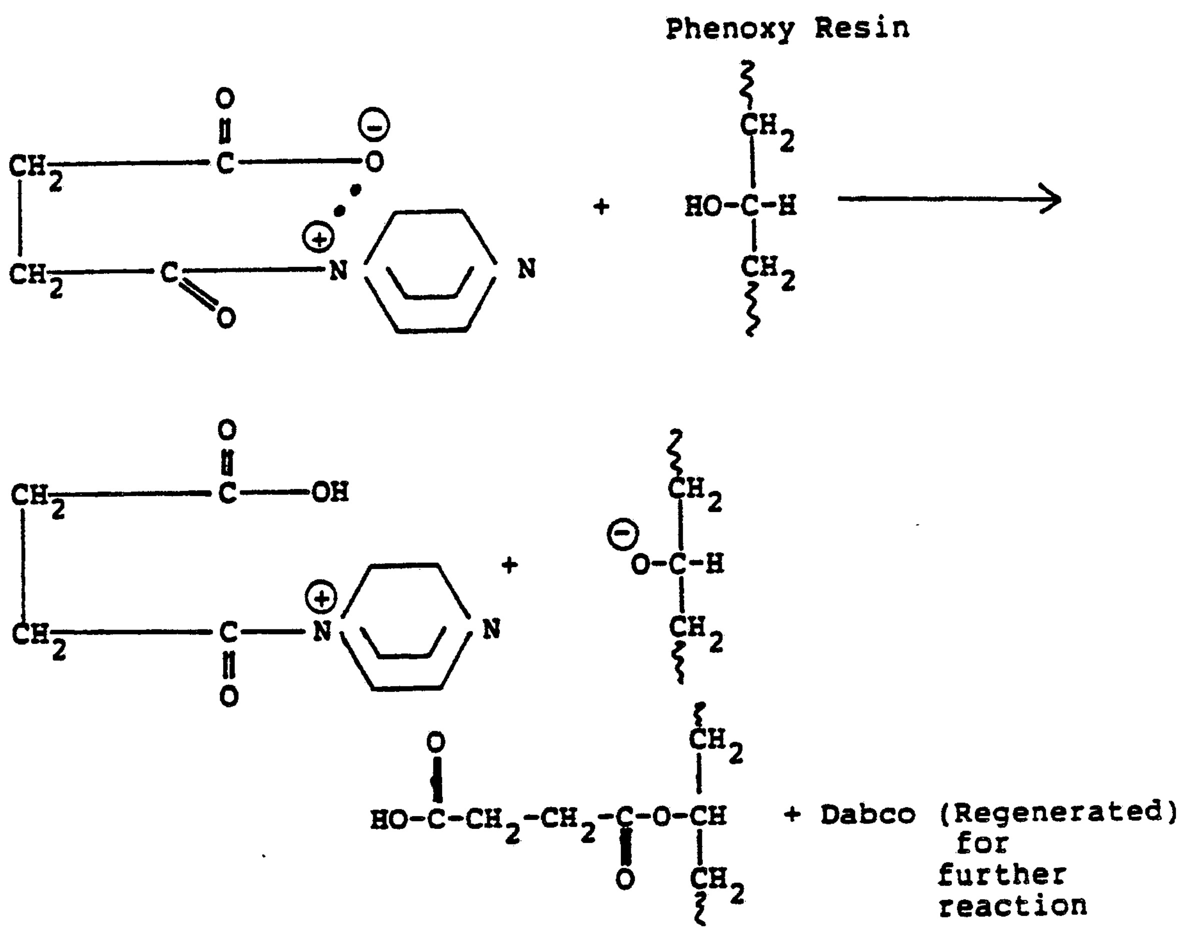


The reaction between the resins and the anhydride is preferably effected in a non-reactive solvent, such

as dimethyl Carbitol (2-methoxyethyl ether) 2-ethoxyethyl ether, tetrahydrofuran, 1,4 dioxane, ethylene glycol dimethyl ether, ethylene glycol diethyl ether, methylisobutyl ketone, methylethyl ketone, cyclohexanone, dimethyl sulfoxide, dimethyl formamide, and toluene.

Of these, methylethyl ketone is particularly preferred. In selecting a solvent, it is important to note that the solvent should not contain any reactive hydroxyl groups or hydrolyzable ester linkages.

Alternatively, the resins can be dispersed in a poor solvent, such as an alkylated aromatic, to a fine particle size. The anhydride should be soluble in the solvent to form a continuous phase which can react on the surface of the particle. An example would be methyltetrahydrophthalic anhydride using benzyldimethylamine as catalyst. The preparation of a nonaqueous dispersion of, for example, a 30,000 molecular weight polyhydroxyether, because of its high melt viscosity would require a high shear mixer and the use of a high-boiling solvent or a pressure vessel to prevent evaporation of the solvent.

The solvent for the resin blend will typically be a polar solvent, and more particularly, an oxygenated solvent such as an ether or a ketone. The more desirable situation, of course, is that the resin blend be soluble in the particular solvent employed; and this is the usual principal requirement. Ideally, but not an essential requirement, the solvent should have some but not a great amount of water solubility. Also, the solvent should have a boiling point lower than water.

Typically, the anhydride will be dissolved in a solvent prior to addition to the resin blend; and this solvent can be the same as the solvent used for the resin blend or different, as is desired. All that is really required for the solvent is that it be most desirably capable of dissolving the particular anhydride. Also, and less important since the amount of anhydride relative to the amount of resin is typically relatively small as far as the solvent level is concerned, it is desirable but not essential that the boiling point be less than that of water.

Also, as is known, it is desirable for many applications (e.g., when the coating is cured at elevated temperatures) to incorporate a coalescing solvent to allow a film with the desired properties to form upon curing of the coating composition. Many suitable coalescing solvents are known and may be employed. In general, coalescing solvents used should have (1) a lower evaporation rate than that of water, (2) sufficient water solubility to avoid the presence of two phases, and (3) adequate solubility in the solvent used for the resin blend. Illustrative useful examples include PROPASOL® SOLVENT P (n-propoxypropanol, Union Carbide Corporation, Danbury, Connecticut) and butyl carbitol. The amount should be such that the resulting coating has the desired film properties. As an example, a coalescing solvent level of from 5 to 10 percent, based upon the total weight of the coating composition, should be suitable.

In accordance with one aspect of the present invention, the coalescing solvent, when needed, is utilized as the solvent for the anhydride. In this instance, an excess should be used as some will be lost when the resin solvent is removed. The coalescing solvent, of course, could be added at other stages of the preparation of the coatings of this invention. However, addition with the anhydride is particularly facile.

The relative amount of the anhydride employed will depend upon the waterborne characteristics desired for the particular coating composition together with the requirements of the specific coating application. In general, from the functional standpoint, enough of the anhydride is employed to insure that the phenoxy resin blend is, as a minimum, waterborne or hydrophil in the sense of being dispersible in water. For some applications, it will be desirable that enough anhydride is utilized so that under the particular reaction conditions employed the resulting carboxylic acid-modified phenoxy resin blend will be soluble in water upon neutralization, or at least will be clear in appearance so as to appear to be soluble.

On the other hand, the increasing waterborne or aqueous sensitivity provided by the carboxylic acid-modified phenoxy resin blends results in the coating itself having concomitantly increased water sensitivity characteristics. Accordingly, when rigorous hydrolytic and chemical resistance characteristics are desired for the particular application, the level of anhydride employed should be as little as possible, consistent with the minimum waterborne characteristics that can be tolerated.

In general, the phenoxy resin blend will have a minimum of 3 and a maximum of 50 percent of the hydroxyl groups present in the resins reacted to produce moieties having carboxyl groups through the esterification reaction. It should be understood that the percentages set forth refer to the total number of hydroxyl groups that will be reacted, and not that either component will have that percentage reacted. As an example, with a given level of anhydride employed, the percent of hydroxyl groups reacted in the modifier resin may be much greater than is the case with the phenoxy resin. Increasing incorporation of carboxyl moieties will, of course, result, after neutralization, in more sensitive waterborne characteristics.

The desired reaction is illustrated by the reaction between Phenoxy PKHH and succinic anhydride:

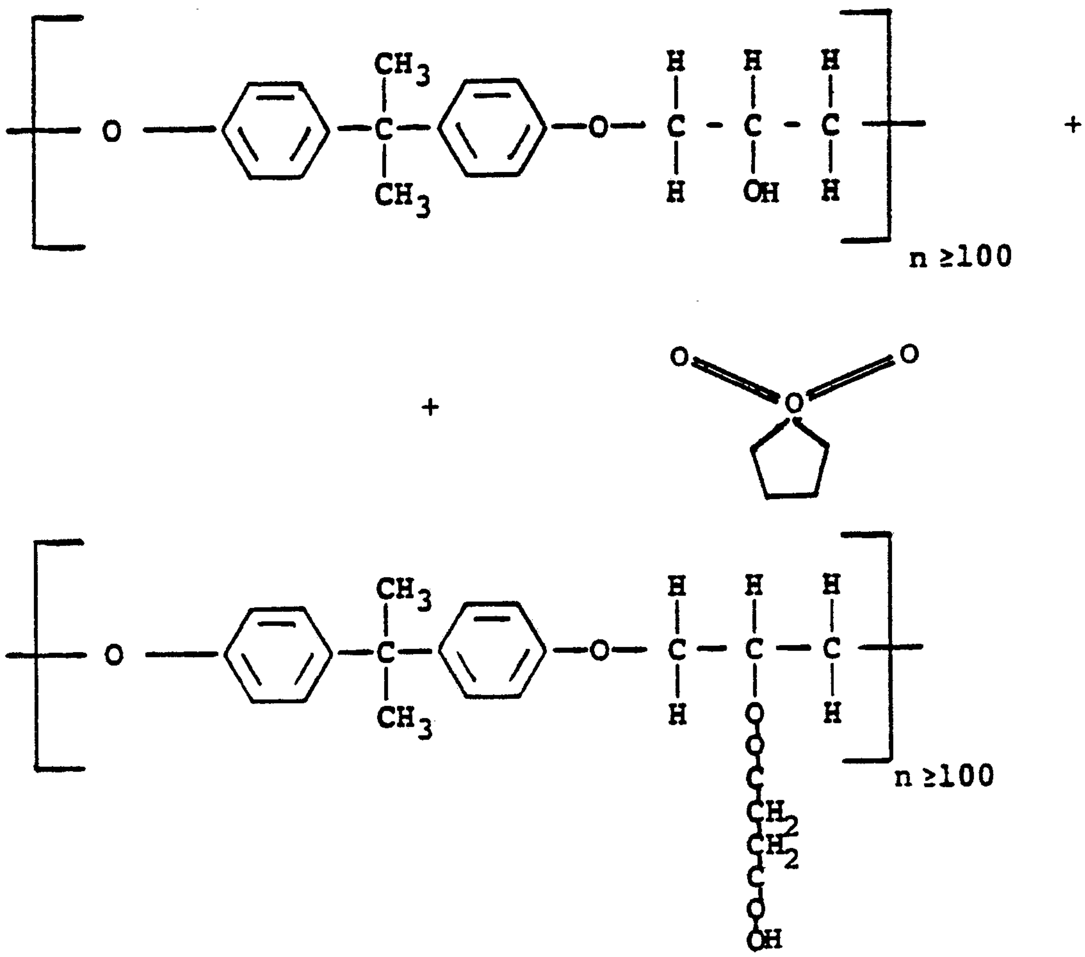

The concentrations of the various materials may vary substantially, depending upon the materials and operating conditions selected. Optimization of the reaction would be a matter of routine experimentation within the skill of the art. In general, however, it may be expecte that, on a weight percent basis, the concentration of the total resin (i.e., phenoxy and modifier resins) would be 98.9 to 74.8, preferably 97 to 88%; the concentration of the anhydride would be 1 to 25, preferably 3 to 12%; and the concentration of the catalyst would be 0.05 to 0.5%.

The reaction mixture should be well stirred, and the reaction can be carried out at a temperature of from ambient conditions (e.g. ~25° C ) up to 80° C. Somewhat elevated temperatures will be useful to lessen the reaction time.

In conducting the reaction, it is desirable that only a minority of the available hydroxyl groups be converted, in order to permit a later hydroxyl cross-linking reaction and to minimize water and chemical resistance sensitivity of the polymer. Typically, only 3 to 50, preferably 5 to 25% of the available hydroxyls are reacted. Sufficient hydroxyl groups should be left in the resins so the combinations of hydroxyl and carboxy groups can co-react or react with cross-linkers, such as a variety of di- or polyisocyanates or melamine formaldehyde. The percent conversion is controlled by selecting the number of moles of anhydride necessary to react with the hydroxyl groups on the phenoxy and modifier resins, and then carrying out the reaction until no anhydride groups remain. When unsaturated anhydrides, such as tetrahydrophthalic anhydride, are used, additional cross-linking can take place via polymerization or copolymerization with other unsaturated materials by using heat, catalysis or radiation.

It should be appreciated that it is necessary for appropriate reaction with the anhydride be achieved with both the phenoxy and modifier resins. If inadequate reaction with the modifier resin results, the resulting resin blend will take on the characteristics of the phenoxy resin itself and will not exhibit the desired characteristics of the present invention. Inadequate reaction with the phenoxy resin will likewise be undesireable.

Looking at the resin blend, it is apparent that the population of hydroxyl groups present will largely be from the phenoxy resin because such resin is present in a major amount and each molecule contains

numerous hydroxyl groups (e.g., one per repeating unit). However, the hydroxyl groups are secondary hydroxyl groups. To provide adequate reactivity with the anhydride in competition with the phenoxy resin, the modifier resin should have functional groups that are more reactive than are the secondary hdyroxyl groups of the phenoxy resin.

In this regard, it has been found that the primary hydròxyl groups of the preferred polycaprolactone polyols are sufficiently reactive in competition with the phenoxy resin to provide a highly desirable coating composition. If desired, enhanced reactivity of the modifier resin with the anhydride can be obtained by using the lower molecular weight materials.

The resulting carboxylic acid-modified phenoxy resin blend is then neutralized to provide the desired waterborne characteristics. In general, neutralization may be effected by any of many known techniques, utilizing any type of material capable of imparting the waterborne characteristics desired. As an illustrative example, any organic amine such as dimethylethanolamine may be utilized. In other words, the particular neutralizing agent employed will depend, in large part, upon the evaporation conditions that will be attendant in "curing" the coating. Indeed, ammonia may be utilized for applications where a room temperature bake or air drying coatings are involved. The particular neutralizing agent employed may be added in water, and the typical conditions known may be utilized for effecting a neutralization. It has been found satisfactory to add enough of the neutralizing agent so as to neutralize to a pH in the range of 7 to 8.

Following the neutralization, the resin solvent employed can be removed. Enough of the resin solvent should be removed so that the resulting coating will have the desired film-forming properties. Vacuum distillation has been found suitable for removal of the resin solvent. In effect, what occurs during vacuum distillation is the inversion from a water-in-oil emulsion to an oil-in-water emulsion. It has been found desirable to effect this inversion as early in the vacuum distillation process as possible. This is achieved by adding enough water to effect the inversion. The water may be desirably added when the viscosity begins to build up.

## Coating Compositions

Following solvent removal, the thus-produced waterborne phenoxy resin blend can be formulated to provide the desired waterborne coating composition for the particular application. Because of the wide variety of applications in which coatings including the phenoxy resin blend may be utilized, the resin content and other components employed may vary widely, depending in principal part on the performance characteristics desired.

The concentration of the resin blend used is thus not particularly critical. In general, however, a resin content of from 25 to 40 percent, based upon the total weight of the coating composition, should be suitable for most applications.

In contrast to carboxylic acid-modified phenoxy resins, the coating compositions of the present invention, utilizing the phenoxy and modifier resin blend, provide a stability upon extended storage that is markedly superior. Also, the viscosity of the waterborne phenoxy and modifier resins can be significantly lower, allowing either for easier processing at a common solids content or for a substantially higher resin content. It is also believed that, for whatever reason, the coating compositions of the present invention are more stable when pigments need to be included. Still further, the coatings which result from utilizing the coating compositions of this invention exhibit relatively lower water sensitivity. Yet another advantage of the present invention is that the waterborne characteristics can be enhanced, even to the point of providing what visually appears to be a clear solution.

All of these advantages are obtained while retaining the enhancement in the flexibility characteristics of the coating obtained through use of the modifier resin. The coating compositions of the present invention thus comprise the carboxylic acid-modified phenoxy/modified resin blend with enough water to provide the desired solids content, together with whatever other optional components are utilized for the particular application. The resulting coating composition can be employed in any of the many applications, such as those known for formable coatings.

Other components which may be included in the coating composition are functional additives such as suspending agents, viscosity modifiers, colorants or pigments, antioxidants, crosslinking agents and the like. Suitable additives are known in the art, and the amount employed should be sufficient to provide the desired function (e.g., viscosity modification).

In the Examples which follow hereinafter, the following materials were used:

polyrol: a caprolactone poyol of about 3000 molecular weight which melts at50-60 °C and has a viscosity of about 1,500 $mm^2/s$ (csk) at 55 °C (130 °F)

phenoxy resin: a polyhydroxyether which is a condensation polymer derived from bisphenol-A 2,2-bis(p-hydroxyphenyl)propane and epichlorohydrin and having a molecular weight of about 60,000.
catalyst: "Dabco" triethylenediamine (a trade designation of Air Products Company).

All parts and percentages are set forth on a weight basis unless otherwise noted.

Also, unless otherwise indicated, the amount of anhydride added to the reaction was calculated on a molar basis assuming 100% phenoxy resin. For example, 700 grams of phenoxy resin and 300 grams of polyol would be considered 1000 grams of phenoxy resin (3.52 moles of phenoxy resin). Thus, to provide a level of 10% trimellitic anhydride, 67.61 grams would be added to the reaction mixture [(3.52 moles) (0.1) (192 grams/mole) = 67.61 grams].

In general, and unless otherwise stated, all experiments were carried out using a 2-piece round bottom flask commonly known as a resin flask fitted with a condenser, a thermometer, and a motor that was connected to a steel paddle used for agitation of the mixture. Unless otherwise indicated, all reaction steps were carried out with agitation, including the vacuum distillation procedure and the cooling of the flask to ambient temperature. With one exception, which is noted, the ratio of phenoxy resin to the polyol employed was 70:30 on a weight basis. Viscosity was measured with Gardner viscosity tubes, and the flash point was measured with a WC706D Pensky-Martens closed cup (ASTM D-93).

The following Examples are illustrative of various embodiments of the invention.

## EXAMPLE 1

This Example illustrates the use of tetrahydrofuran (THF) as the primary solvent in the preparation of a carboxylic acid grafted phenoxy resin/polyol blend.

THF (4500 g ) is charged to a 12 liter flask. Phenoxy resin (1050 g ) and polyol (450 g ) were added to the flask and dissolved as the flask was heated to 66 °C. Ten percent trimellitic anhydride (hereinafter "TMA") (101.4 g dissolved in 500 g THF) and catalyst (4.5 g dissolved in 50 g THF) were added to the 12 liter flask which was then refluxed for 4 hours.

The flask was cooled to room temperature, and PROPASOL® SOLVENT P (500 g ) was added, followed by a slow addition of dimethylethanolamine (hereinafter "DMEA") (80.58 g in 3880 g $H_2O$) with good agitation.

The mixture was vacuum distilled at room temperature. After the removal of about 2500 g of distillate, the viscosity increased making agitation difficult. To reduce the viscosity, 200 g of $H_2O$ was added; and vacuum distillation was continued.

After about 18 hours of vacuum distillation and reheating the mixture twice, a satisfactory final product of 28-30% non-volatiles resulted. The product had a viscosity of 140 mPa•s (cP) at ambient temperature and a closed cup flash point of 15 °C (58 °F).

## EXAMPLE 2

This Example illustrates the use of methylethylketone (MEK) as the primary solvent in the preparation of a carboxylic acid grafted phenoxy resin/polyol blend.

MEK (4500 g ) was charged to a 12 liter flask. Phenoxy resin (1050 g ) and polyol (450 g ) were added to the flask and dissolved as the flask was heated to 80 °C. Ten percent TMA (101.4 g dissolved in 600 g PROPASOL® SOLVENT P) was slowly added into the flask. Catalyst (4.5 g dissolved in 20 g PROPASOL® SOLVENT P) was added, and the mixture is refluxed for 4 hours.

The flask was allowed to cool down to room temperature. After having been left overnight, DMEA (80.57 g dissolved in 3880 g $H_2O$) is slowly added into the flask. The flask was held at room temperature for 1 hour, and then distilled by a vacuum of up to 73 mbar (28.8 inches) at room temperature for 3 hours and 45 minutes; 2400 g of distillate was removed.

The next day, 300 g of $H_2O$ was added to lower the viscosity; and the mixture was distilled by a vacuum of 72 mbar (28.5 inches) for another 2 hours, resulting in the removal of another 1400 g distillate.

Six days later, vacuum distillation was resumed. After 5 hours of distillation by a vacuum of 70 mbar (27.8 inches), 650 g of distillate was removed from the mixture. 200 g of water was then added to lower the viscosity. The next day, the mixture was again vacuum distilled for 3 hours, resulting in the removal of 350

g distillate and a product of 26.36% non-volatiles. Another 200 g of $H_2O$ was added , and vacuum distilled for 3 hours. This resulted in the removal of 300 g of distillate and a product of 26.81% non-volatiles. Another 200 g of $H_2O$ was added to lower the viscosity, and vacuum distilled for 4 hours. This resulted in a product of 26.95% non-volatiles. Vacuum distillation was resumed for another 2 hours.

Another 300 g of $H_2O$ was added to lower the viscosity to 250 mPa•s (cP) giving 25.72 % non-volatiles. Finally, 100 g of $H_2O$ was added to 1 gallon of the product; this resulted in a satisfactory final product of 24.90% non-volatiles and a viscosity of 125 mPa•s (cP). In contrast to the use of THF as a primary solvent, it is believed that MEK as a primary solvent is more easily removed from solution upon vacuum distillation, and thus the product has a relatively high flash point (greater than 85° C -184° F-), and forms a good film when dried at room temperature, or after a three minute bake at 130° C.

## EXAMPLE 3

This Example illustrates the use of 20% TMA in the preparation of a carboxylic acid grafted phenoxy resin/polyol.

THF (750 g ) is charged to a 2 liter flask. Phenoxy resin (175 g ) and polyol (75 g ) were added to the flask and dissolved as the flask was heated to 66° C. 20 percent TMA (33.80 g dissolved in 250 g THF) and catalyst (1.5 g in 50 g THF) are also added to the 2 liter flask, which is then refluxed for 4 hours and then left overnight. The next day, the resin mixture was then added slowly into DMEA (26.86 g in 850 g $H_2O$), in a 3 liter flask, and held at 60° C for 1 hour.

The solution was distilled by a vacuum of 27 inches. A satisfactory final product was obtained of 24.45% non-volatiles.

## EXAMPLE 4

This Example illustrates the use of 10% TMA in the preparation of a carboxylic acid grafted phenoxy resin/polyol blend.

THF (750 g ) is charged to a 2 liter flask. Phenoxy resin (175 g ) and polyol (75 g ) are added to the flask and dissolved as the flask is heated to 66° C. Ten percent TMA (16.9 g dissolved in 250 g THF) and catalyst (0.75 g dissolved in THF) were added to the 2 liter flask, which was then refluxed for 4 hours. The flask was then allowed to cool for about 16 hours.

DMEA (13.42 g in 750 g $H_2O$) was charged to a 3 liter flask and heated to 65° C. PROPASOL® SOLVENT P (100 g ) was added, and then the resin/polyol blend was added into the flask and agitated for1 hour at 65° C.

The solution was vacuum distilled and 20 g of PROPASOL® SOLVENT P was added to give a satisfactory final product of 26.8% non-volatiles. The product viscosity was less than that of the product of Example 3, the Example 3 product being more readily water dispersible due to the higher level of carboxyl addition involved.

## EXAMPLE 5

This Example illustrates the use of 5% TMA in the preparation of a carboxylic acid grafted phenoxy resin/polyol blend.

THF (750 g ) was charged to a 2 liter flask. Phenoxy resin (175 g ) and polyol (75 g ) are added to the flask and dissolved as the flask was heated to 66° C. 5 percent TMA (8.45 g dissolved in 250 g THF) and catalyst (0.38 g dissolved in 50 g THF) were added to the 2 liter flask, which was then refluxed for 4 hours. The flask was then cooled down and left overnight.

DMEA (6.75 g in 600 g $H_2O$) and PROPASOL® SOLVENT P (100 g ) were then charged to a 3 liter flask and heated to 65° C. The resin/polyol blend was added to the flask and agitated for 1 hour at 65° C. The solution was then distilled by a vacuum of 28.5 inches at 65° C for one and one-half hours.

A satisfactory final product was obtained, a milky white solution of 30.20% non-volatiles.

## EXAMPLE 6

This Example illustrates the use of PROPASOL® SOLVENT P as a coalescing solvent in the preparation of a carboxylic acid grafted phenoxy resin/polyol blend.

THF (4500 g ) was charged to a 12 liter flask. Phenoxy resin (1050 g ) and polyol (450 g) were added to the flask and dissolved as the flask was heated to 66° C. Ten percent TMA (101.41 g dissolved in 600 g THF) and catalyst (4.5 g dissolved in 50 g THF) were added to the 12 liter flask, which was then refluxed at 66° C for 4 hours. The flask was then cooled down and left overnight.

The next day, the flask was reheated to 66° C and PROPASOL® SOLVENT P (550 g ) was added to the solution. Next, DMEA (80.58 g dissolved in 3880g $H_2O$) was slowly added to the flask, followed by agitation of the solution for one and a half hours at 66° C. The solution was then, while at 66° C., vacuum distilled; 2600 g of distillate was removed, and then left overnight.

The flask was reheated up to 66° C. and another 700 gm. of distillate was removed by vacuum distillation. A satisfactory final product was obtained, a solution of 26.44% non-volatiles.

## EXAMPLE 7

This Example illustrates the effect of the preparation of a carboxylic acid grafted phenoxy resin/polyol blend without including a coalescing solvent.

THF (3000 g ) was charged to a 5 liter flask. Phenoxy resin (700 g ) and polyol (300 g ) were added to the flask and dissolved as the flask was heated to 66° C. 20 percent TMA (135.21 g dissolved in 500 g THF) and catalyst were added to the flask, which was then refluxed for 4 hours at 66° C. The flask was then cooled down and left overnight.

The next day, DMEA (107.43 g in 3000 g $H_2O$) was charged to a 12 liter flask and heated to 66° C. The phenoxy resin/polyol blend was then added slowly to the 12 liter flask. The mixture was held at 66° C for one and a half hours. The solution was then vacuum distilled for two and a half hours. 2000 g of distillate was removed. The flask was then allowed to cool to room temperature.

About 2½ days later, the mixture was reheated to 60° C and 300 g of $H_2O$ was added. About 300 g of distillate was removed upon distillation by a vacuum of 69 mbar (27 inches) at 28° C. Although a satisfactory final product of about 25.89% non-volatiles was obtained, it is believed that the film-forming properties are not as good as in Example 6 and Example 8 wherein coalescing solvents were used.

## EXAMPLE 8

This Example illustrates the use of butyl carbitol as a coalescing solvent in the preparation of a carboxylic acid grafted phenoxy resin/polyol blend.

THF (3000 g ) was charged to a 12 liter flask. Phenoxy resin (700 g ) and polyol (300 g ) were added to the flask and dissolved as the flask was heated to 66° C. Ten percent TMA (67.6 g dissolved in 500 g THF) and catalyst were added to the flask, which was then refluxed at 66° C for 4 hours.

Butyl carbitol (400 g ) was next added to the solution as a co-solvent. DMEA (53.71 g in 3000 g $H_2O$) was slowly added to the phenoxy resin/polyol blend which was kept at or near the reflux temperature (66° C). The mixture was held at reflux for 1 hour, cooled to room temperature and left overnight.

The mixture was reheated to 45° C the next day and distilled by a vacuum of up to 70 mbar (27.5 inches) for about 3.5 hours, removing about 3300 g of distillate.

A satisfactory final product of about 26.05% non-volatiles was obtained.

## EXAMPLE 9

This Example illustrates the use of maleic anhydride in the preparation of a carboxylic acid grafted phenoxy resin/polyol blend.

Methylethylketone (MEK) (1000 g ) was charged to a 5 liter flask. Phenoxy resin (350 g ) and polyol

(150 g ) were added to the flask and dissolved as the flask was heated to 80 °C (reflux temperature). 10 percent maleic anhydride (17.26 g dissolved in 500 g MEK) and catalyst were added to the flask, which was then refluxed at 80 °C for 5 hours. The flask was then cooled down and left overnight.

PROPASOL® SOLVENT P (100 g ) was added to the flask the next day, and then DMEA (13.42 g in 1050 g $H_2O$) was added slowly with good agitation.

Upon vacuum distillation, the mixture separated into a two-phase system. Although this experiment did not provide a suitable product, it is believed that maleic anhydride can be used to obtain a satisfactory product. This could be achieved, it is believed, by utilizing either a higher percentage of maleic anhydride and/or longer reaction time.

## EXAMPLE 10

This Example illustrates the use of phthalic anhydride in the preparation of a carboxylic acid grafted phenoxy resin/polyol blend.

MEK (500 g ) was charged to a 3 liter flask. Phenoxy resin (175 g ) and polyol (75 g ) were added to the flask and dissolved as the flask was heated to 80 °C. 20 percent phthalic anhydride (PTA) (19.75 g dissolved in 250 g MEK) and catalyst (0.75 g in MEK) were added to the flask, which was then refluxed at 80 °C for 4 hours.

The amount of phthalic anhydride (PTA) added was calculated in the following manner. The equivalent weight for 70% phenoxy resin (1/284 g /mole of phenoxy resin) (0.70) (100) + 0.2465 equiv.) and for 30% polyol ((1/1500 g /eq. of polyol) (0.30) (100) = 0.02 equiv.) were calculated individually. This represented a total equivalent weight of 0.2665 for the blend. Thus, 7.9 grams of PTA ((0.2665 equiv.) (0.2) (148.12 g /mole of PTA) must be added for every 100 grams of blend. Thus, for 250 grams of blend, 19.75 grams of PTA ((7.9 g of PTA) (250 g of blend/100 g of blend)) must be added.

The flask was then cooled down to room temperature, and PROPASOL® SOLVENT P (90 g ) was added. DMEA (20.34 g in 540 g $H_2O$) was slowly added to the mixture. Upon vacuum distillation, the mixture turned into a two-phase system.

Although this experiment did not result in a suitable final product, phthalic anhydride is considered useful. It is thus believed that a satisfactory product would be obtained by employing either a higher percentage of phthalic anhydride and/or a longer reaction.

## EXAMPLE 11

This Example illustrates a further preparation of a carboxylic acid grafted phenoxy resin/polyol blend using TMA.

MEK (500 g ) was charged to a 3 liter flask. Phenoxy resin (175 g ) and polyol (75 g ) were added to the flask and dissolved as the flask was heated to 80 °C.

10 percent TMA (16.9 g dissolved in 70 g PROPASOL® SOLVENT P) and catalyst (0.75 g in 20 g PROPASOL® SOLVENT P) were added to the flask, which was then refluxed at 80 °C for 4 hours. The flask was then cooled down and left overnight.

The next day, DMEA (13.4 g in 544 g $H_2O$) was slowly added to the resin at room temperature. The solution was then vacuum distilled for 2 hours resulting in a solution of high viscosity. 100 g of $H_2O$ was added followed by distillation for another hour. This resulted in 20.45% non-volatiles. Another 100 g of $H_2O$ was added to reducse the viscosity. The solution was vacuum distilled for another two and one-half hours, resulting in a final product of 25.38% non-volatiles.

About one week later, one-half of this product was again vacuum distilled for about 2 hours. The final product was 28.97% non-volatiles. This resulted in a satisfactory product which had a flash point of 75.7 °C (168 °F) and produced an excellent film at room temperature. Although the film did form breaks at 130 °C, it is believed that more suitable film-forming properties can be obtained with enhanced distillation methods, such as was achieved in Example 2. The flash point of the product of Example 2 was higher than that of the product here, indicating that a higher percentage of the resin solvent was removed compared to this Example.

EXAMPLE 12

This Example illustrates the use of an 80:20 phenoxy resin/polyol blend in the preparation of a carboxylic acid grafted phenoxy resin/polyol blend.

THF (3000 g ) was charged to a 12-liter flask. Phenoxy resin (800 g ) and polyol (200 g ) were added to the flask and dissolved as the flask was heated to 66° C. 10 percent TMA (67.61 g dissolved in 500 g THF) and catalyst (3.0 g dissolved in 50 g THF) were added to the flask, which was then refluxed at 66° C for 4 hours. The flask was then allowed to cool and was left overnight.

The next day, PROPASOL® SOLVENT P (400 g ) was added to the solution as it was being heated to 66° C. DMEA (53.72 g in 2600 g $H_2O$) was added to the flask, which was then agitated for 1 hour at 66° C.

The vacuum distilled product was stable for about 90 days, at which time the product solidified. The stability achieved can be contrasted with that of the phenoxy resin itself which will often solidify within about 30 days or so.

EXAMPLE 13

This Example illustrates the effect of the addition of substantial quantities of water during the vacuum distillation of a carboxylic acid grafted phenoxy resin/polyol blend.

MEK (4500 g ) was charged to a 12 liter flask. Phenoxy resin (1050 g ) and polyol (450 g ) were added to the flask and dissolved as the flask was heated to 80° C. 10 percent TMA (101.4 g dissolved in 600 g PROPASOL® SOLVENT P) and catalyst (4.5 g dissolved in 20 g PROPASOL® SOLVENT P) were added to the flask, which was then refluxed at 80° C for 4 hours. The flask was then allowed to cool and was left overnight.

The next day, DMEA (80.57 g in 3880 g $H_2O$) was slowly added to the phenoxy resin/polyol blend at room temperature. The solution was vacuum distilled for 3 hours 30 minutes, which resulted in a product of high viscosity. 1000 g of $H_2O$ was added and vacuum distillation was resumed for another 2 hours and 20 minutes. After leaving overnight, vacuum distillation was carried out for another 7 hours resulting in the removal of 1460 g of distillate. After leaving the flask again overnight, the product was again vacuum distilled until about 1280 grams of additional of distillate was removed.

A satisfactory final product was obtained, such product having a viscosity of about 50 mPa•s (cP).

## Claims

1. A aqueous coating composition comprising:

(a) a phenoxy resin having pendant secondary hydroxyl groups,

(b) from 5 to 50% by weight of the total resin of a modifier resin containing hydroxyl groups, which modifier resin is relatively soft in comparison to the phenoxy resin, is compatible with the phenoxy resin and has:

(1) a reduced viscosity of 0.1 to 2 dl/g in tetrahydrofuran at 25° C;

(2) a Tg of -120 to 30° C; and

(3) a number average molecular weight of 500 to 10,000,

from 3 to 50% of the total hydroxyl groups present in the phenoxy and modifier resin having been esterified by reaction with an anhydride of a di- or polycarboxylic acid and neutralized, and

(c) water in an amount sufficient to disperse the phenoxy and modifier resins therein.

2. The aqueous coating composition of claim 1, wherein said phenoxy resin is present in an amount of at least 70 %, preferably from 70 to 80 %, based upon the total weight of the resin.

3. The aqueous coating composition of claim 1 or 2, wherein said phenoxy resin, prior to esterification and neutralization, has the structural formula:

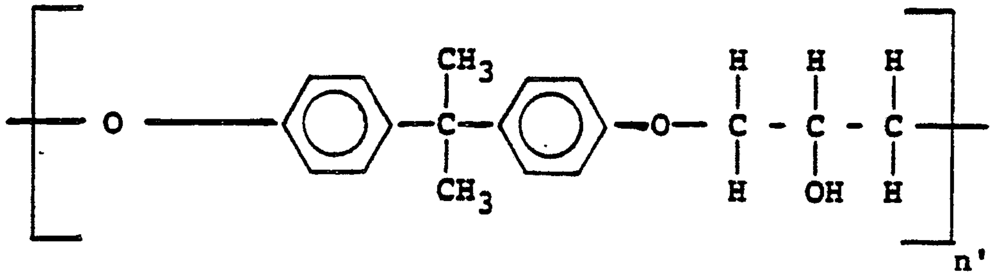

wherein $n' = 50$, preferably = 100.

4. The aqueous coating composition of claims 1 to 3, wherein the anhydride is trimellitic anhydride.

5. The aqueous coating composition of claims 1 to 4, wherein the esterification and neutralization were sufficient to render the phenoxy and modifier resins water soluble.

6. The aqueous coating composition of claims 1 to 5, wherein neutralization is effected with dimethylethanolamine or ammonia.

7. The aqueous coating composition of claims 1 to 6, wherein the modifier resin is an aliphatic polyester derived from epsilon-caprolactone, preferably has a number average molecular weight of from 500 to 3000.

8. A method of preparing the aqueous coating composition of claims 1 to 7

(a) providing a resin blend of (i) a phenoxy resin having pendant secondary hydroxyl groups and (ii) from 5 to 50% by weight of the total resin of a modifier resin containing hydroxyl groups, which modifier resin is relatively soft in comparison to the phenoxy resin, is compatible with the phenoxy resin and has:
(1) a reduced viscosity of 0.1 to 2 dl/g in tetrahydrofuran at 25° C;
(2) a Tg of -120 to 30° C; and
(3) a number average molecular weight of 500 to 10,000, in a solvent for the resins;

(b) reacting the resin blend with an anhydride of a di- or polycarboxylic acid in an amount sufficient to esterify from 3 to 50% of the total hydroxyl groups present;

(c) neutralizing the reacted resin blend; and

(d) removing the solvent while adding water in an amount sufficient to disperse therein the neutralized reacted resin blend.

9. The method of claim 8 wherein the anhydride is added in a coalescing solvent, preferably in the n-propoxy-propanol and/or butyl carbitol.

10. The method of claim 8 or 9 wherein the resin solvent is methylethyl ketone.

11. The method of claims 8 to 10 wherein the reacted resin blend is neutralized to a pH in the range of from 7 to 8.

12. The method of claims 8 to 11 wherein neutralization is effected with dimethylethanolamine or ammonia.

13. The method of claims 8 to 12 wherein the resin solvent is removed by vacuum distillation.